# FASCICULE DE BREVET EUROPEEN

(11) **EP 0 788 039 B1**
(45) Date de publication et mention de la délivrance du brevet: **27.02.2002**
(21) Numéro de dépôt: 97400185.1
(22) Date de dépôt: 27.01.1997
(51) Int. Cl.: G05B 19/05

(54) **Système d'automatisme sécurisé**
Gesichertes automatisches System
Dependable automatic system

(30) Priorité: 30.01.1996 FR 9601340
(43) Date de publication de la demande: 06.08.1997
(73) Titulaire: Schneider Automation, 06560 Valbonne (FR)
(72) Inventeur: Schmitt, Laurent, 38250 Lens-en-Vercors (FR); Nadaud, Matthieu, 38000 Grenoble (FR)
(74) Mandataire: Saint Martin, René

(56) Documents cités:
- EP-A- 0 186 613
- WO-A-94/03846
- DE-A- 4 407 396
- INDUSTRIAL APPLICATIONS SOCIETY 36TH ANNUAL PETROLEUM AND CHEMICAL INDUSTRY CONFERENCE, 11 - 13 Septembre 1989, pages 23-27, XP000077773 D.S. SIKORA ET AL: "Emergency Shutdown System"

## Description

La présente invention se rapporte à un système d'automatisme sécurisé constitué de deux automates équipés d'une part de coupleurs de redondance reliés l'un à l'autre par une liaison inter-chaîne et d'autre part de coupleurs analogiques recevant chacun l'une des deux voies d'entrée d'un même signal analogique fourni par un capteur ou appareil similaire.

Il est nécessaire pour assurer la sécurité de fonctionnement de certains process, d'utiliser un dispositif d'automatisme sécurisé tel que celui du brevet FR-A-2 561 410. Un tel dispositif est constitué, en se référant à la figure 1, de deux automates conventionnels redondants PLC-A et PLC-B qui reçoivent chacun les signaux provenant de capteurs C, via des borniers D, sur leurs voies d'entrées A et B ou envoient des signaux de commande aux organes de commande du process. Chaque automate programmable PLC-A ou PLC-B comprend un coupleur de redondance CR-A ou CR-B respectivement qui est associé au bus interne. Les deux coupleurs de redondance CR-A et CR-B sont reliés l'un à l'autre par la liaison inter-chaîne LIC à haut débit, de type ETHERNET, qui sert à assurer la cohérence de leurs traitements respectifs. Chacun des automates programmables peut recevoir sur ses entrées des signaux « tout ou rien » (dits TOR) ou des signaux analogiques. Ces signaux analogiques sont reçus sur deux coupleurs analogiques CA-A et CA-B qui sont montés dans les bacs des automates PLC-A et PLC-B respectivement, via les voies d'entrée A et B.

Les valeurs des entrées reçues par les voies A et B sont tout d'abord échangées entre les deux automates PLC-A et PLC-B pour être traitées dans les coupleurs de redondance CR-A et CR-B. Ces valeurs des entrées des voies A et B peuvent différer et il est par conséquent nécessaire d'introduire un mécanisme capable de comparer ces entrées A et B et de choisir une entrée résultante appropriée, toujours identique sur les deux chaînes pour traitement dans l'unité centrale par l'application client.

Jusqu'à présent, le traitement de cohérence sur les entrées analogiques n'a pas été résolu de manière satisfaisante.

La présente invention a pour but de fournir un système de traitement de cohérence des entrées analogiques qui opère une discrimination entre une situation (dite « nominale ») où les entrées peuvent différer en valeurs mais restent concordantes et une situation (dite « dégradée ») où les entrées ne sont plus considérées comme concordantes. Cette situation est caractérisée par l'envoi d'un signal de discordance.

Le système d'automatisme selon l'invention est caractérisé par le fait qu'il consiste à réaliser un échantillonnage physique des signaux d'entrée dans les coupleurs analogiques, à les échanger avec la mémoire de l'unité centrale, à prélever, dans la mémoire, les valeurs échantillonnées à la fréquence d'échantillonnage automate et à réaliser une analyse de concordance des dites valeurs échantillonnées de manière à détecter si les différences sont dues au mécanisme d'acquisition des données auquel cas les entrées sont concordantes ou bien à une véritable différence sur les entrées physiques auquel cas les entrées sont discordantes.

Selon une caractéristique, l'automatisme analyse par une première condition les entrées des deux voies de manière à, à partir de la valeur de l'entrée échantillonnée en avance sur la seconde entrée et des valeurs de la seconde entrée au cycle courant et au cycle précédent, déterminer si la valeur de la première entrée est comprise entre les valeurs de la seconde entrée auquel cas les entrées sont concordantes.

L'invention va maintenant être décrite avec plus de détail en se référant à un mode de réalisation donné à titre d'exemple et illustré par les dessins annexés sur lesquels:
- la figure 1 est un schéma d'automatisme programmable de sûreté selon l'invention;
- la figure 2 est un schéma de la chaîne de traitement des entrées analogiques, comprenant le bloc fonction de traitement de redondance (vote).
- la figure 3 est un organigramme de la fonction de traitement des entrées analogiques selon l'invention;
- la figure 4 est un chronogramme du cycle programme, des échantillonnages et du signal d'entrée;
- la figure 5 est un diagramme illustrant la méthode de comparaison des entrées.

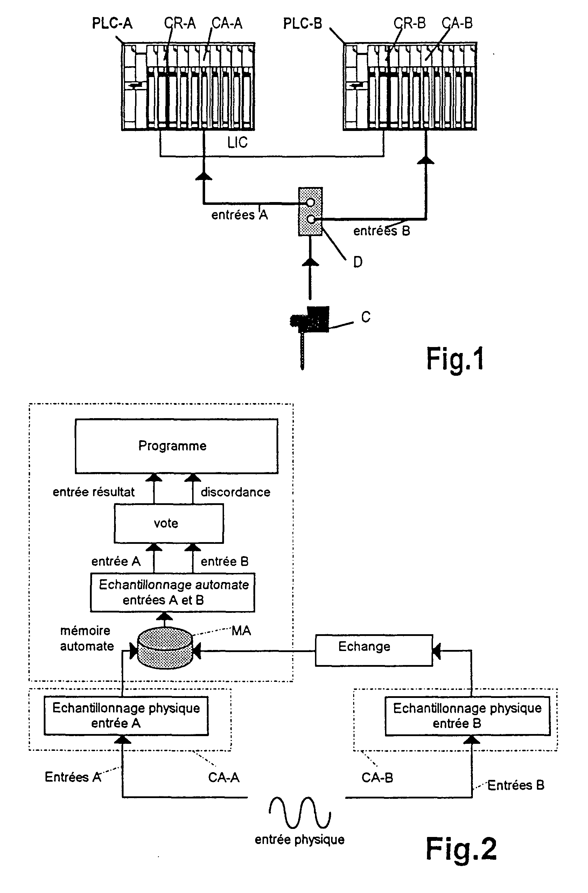

Le système selon l'invention traite la cohérence des entrées analogiques des deux automates PLC-A et PLC-B illustrés à la figure 1, de telle manière que les valeurs de ces entrées analogiques manipulées par le programme client des deux automates soient identiques.

On se référera à la figure 2, où l'on voit que les signaux d'entrée des voies A et B sont envoyés sur les coupleurs analogiques CA-A ou CA-B respectivement dans lesquels ils subissent un échantillonnage physique ayant pour but de les numériser et un échantillonnage automate correspondant au rythme de traitement de l'application client.

Sur un même automate PLC-A ou PLC-B, l'échantillonnage physique et l'échantillonnage automate sont indépendants.

Du fait que les automates PLC-A et PLC-B sont identiques, la fréquence d'échantillonnage physique est identique sur ces deux automates PLC-A et PLC-B.

Les coupleurs de redondance CR-A et CR-B imposent la synchronisation exacte des cycles automate, c'est à dire la synchronisation de l'échantillonnage automate.

La fréquence d'échantillonnage physique et la fréquence d'échantillonnage automate doivent être compatibles avec les caractéristiques de fréquence du signal d'entrée. Cela signifie que ces fréquences d'échantillonnage (physique ou automate) doivent respecter, pour une sinusoïde, la condition du théorème de Shannon selon laquelle les fréquences d'échantillonnage doivent être supérieures ou égales à 2 fois la fréquence du signal d'entrée. Cela signifie par ailleurs que ces fréquences doivent respecter la règle pratique selon laquelle la fréquence d'échantillonnage doit être supérieure ou égale à 5 à 10 fois la fréquence de coupure du signal d'entrée, de façon que l'atténuation du signal soit suffisante à la fréquence d'échantillonnage.

En situation nominale, les signaux analogiques A et B sortant du bornier D et envoyés sur les entrées des coupleurs analogiques CA-A et CA-B sont identiques. Les signaux analogiques qui entrent dans les coupleurs analogiques CA-A et CA-B peuvent différer à cause d'un phénomène de bruit dû aux câbles de raccordement Les signaux résultant de l'échantillonnage physique dans les coupleurs analogiques CA-A et CA-B peuvent différer du fait d'une erreur de conversion analogique-numérique et du déphasage sur les instants d'échantillonnage physique des entrées A et B. Les différences liées au bruit et à la conversion sont "assimilées" à de la "dispersion".Les différences liées aux instants d'échantillonnage sont "assimilées" à du déphasage.

Les valeurs échantillonnées sur l'entrée de la voie A et sur l'entrée de la voie B sont échangées via la liaison inter-chaîne LIC pour être stockées dans la mémoire MA des automates. L'unité centrale exécute un échantillonnage automate qui récupère, dans sa mémoire MA, les valeurs numérisées des entrées A et B, au rythme du cycle du programme client.

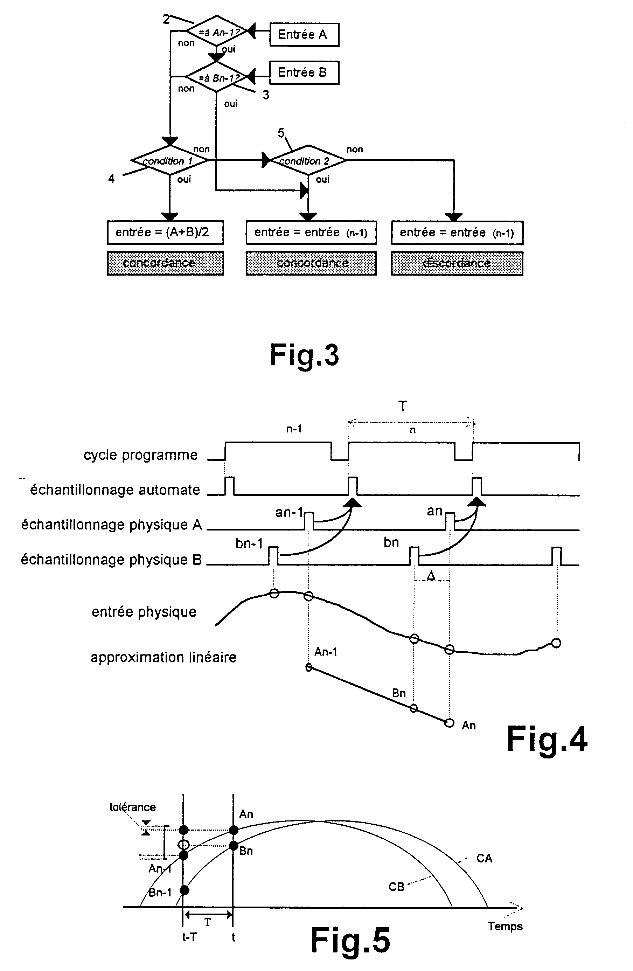

L'automatisme, par son algorithme de vote détaillé à la figure 3, tolère deux sources de différences sur le signal traité, autrement dit, analyse les entrées de manière à détecter si les différences sont dues au mécanisme d'acquisition des données ou bien à une véritable différence sur les entrées physiques. Dans le premier cas on dira que les entrées sont concordantes, alors que dans le deuxième cas on dira que les entrées sont discordantes.

L'unité centrale de l'automatisme teste préalablement, à chaque nouveau cycle automate, s'il y a eu ou non rafraîchissement des entrées des voies A ou B, c'est à dire s'il y a eu modification de l'une ou l'autre ou les deux entrées A ou B par rapport à la valeur du cycle précédent Pour effectuer ce test, l'automate vérifie, par les conditions 2 et 3 de la figure 3, s'il y a égalité entre les valeurs d'entrée courante, A et B, et les valeurs A et B respectivement du cycle précédent La probabilité pour que deux échantillons physiques aient une valeur strictement identique est très faible.

S'il n'y a pas eu de rafraîchissement des deux entrées (alternative "oui" des conditions 2 et 3), alors le vote n'est pas effectué. Dans le cas contraire(alternative "non" des conditions 2 ou 3), le vote est effectué. Ceci sous-entend qu'au moins une des deux valeurs obtenues a été physiquement échantillonnée entre l'instant de la lecture automate du cycle précédent et l'instant du cycle courant.

Sur le chronogramme de la figure 4, les créneaux notés a ou b indiquent les instants où les coupleurs analogiques CA-A et CA-B respectivement, échantillonnent le même signal d'entrée. Du fait que les échantillonnages physiques se font à des instants différents et que le signal de l'entrée physique varie dans le temps, les valeurs des échantillonnages physiques obtenus sur les entrées A et B sont différentes. Dans le cas de la figure 4, l'entrée B est physiquement échantillonnée avant l'entrée A par rapport au cycle dont la période est repérée T.

En raison des contraintes de fréquence citées précédemment, le signal entrant peut être considéré comme une série de segments de droite (approximation linéaire de la figure 4) reliant chacune deux valeurs échantillonnées successives. Le cas général est celui de la variation de valeurs en pente négative, positive ou nulle. Le cas des inversions de courbure sera traité comme le cas particulier.

En se référant à la figure 5, les courbes CA et CB donnent respectivement les valeurs obtenues de A et B après échantillonnage automate. An et Bn sont les valeurs de A et B au cycle n tandis que An-1 et Bn-1 sont les valeurs de A et B au cycle n-1. T représente la période du cycle du programme client.

Sur un cycle automate, An et Bn sont échantillonnés physiquement à un instant quelconque. Supposons B échantillonné physiquement avant A. Si la pente est positive, Bn est inférieur ou égal à An , mais aussi supérieur ou égal à l'échantillon An-1 du cycle précédent. Si la pente est négative, c'est l'inverse. Bn appartient à l'intervalle An-1 An. Afin de tenir compte des écarts de valeurs liés au bruit et aux erreurs de conversion analogique-numérique, la valeur de tolérance doit être ajoutée aux bornes des intervalles de comparaison.. On introduit ainsi un intervalle de comparaison auquel appartient Bn. La tolérance est réglable.

Pour déterminer la concordance des entrées A et B, l'automate vérifie si le déphasage est tolérable ou acceptable, ceci par une première condition repérée 4 sur la figure 3 qui s'énonce de la manière suivante: Si B est en avance sur A et que la pente est positive ou nulle, alors Bn est compris entre An-1 et An (à la tolérance près) ou si B en avance sur A et que la pente est négative, alors Bn est compris entre An et An-1 (à la tolérance près) ou si A en avance sur B et que la pente est positive ou nulle, alors An est compris entre Bn-1 et Bn (à la tolérance près) ou si A en avance sur B et que la pente est négative, alors An est compris entre Bn et Bn-1 (à la tolérance près).

Si cette première condition est respectée (alternative "oui" de la condition 4 de la figure 3), le vote déclare les entrées concordantes et l'entrée résultat sera égale à la moyenne des entrées A et B.

Si cette première condition n'est pas respectée (alternative "non" de la condition 4 de la figure 3) cela peut provenir du fait d'une inversion de courbure. Or le non-respect ne peut se produire, au plus, qu'un cycle sur deux (en respectant les conditions de fréquence énoncées plus haut). L'automatisme effectue le test d'une deuxième condition sur les valeurs échantillonnées des entrées A et B. Dans cette deuxième condition repérée 5 sur la figure 3, l'automate teste si le non respect de la première condition se produit ou non sur deux cycles successifs. Si le non respect est relevé sur deux cycles successifs (alternative "non"), c'est à dire si les deux conditions ne sont pas respectées, alors la discordance est déclarée. Dans la pratique, la valeur de deux est une valeur minimale.

Si la première condition est respectée (concordance), l'entrée résultat sera égale à la moyenne des entrées A et B.

Si la première condition n'est pas respectée et la seconde l'est (ni concordance, ni discordance), l'entrée résultat sera la valeur de l'entrée résultant du cycle précèdent (maintien).

Si la première et la seconde condition ne sont pas respectées (discordance), l'entrée résultat sera la valeur de l'entrée résultant du cycle précèdent (maintien).

Lorsque le vote est « annulé » (pas de nouvel échantillon constaté depuis le cycle antérieur), la valeur du cycle précédent est appliquée.

Il est bien entendu que l'on peut sans sortir du cadre de l'invention imaginer des variantes et des perfectionnements de détail et de même envisager l'emploi de moyens équivalents.

## Revendications

1. Système d'automatisme sécurisé constitué de deux automates (PLC-A, PLC-B) équipés d'une part de coupleurs de redondance (CR-A et CR-B) reliés l'un à l'autre par une liaison inter-chaîne (LIC) et d'autre part de coupleurs analogiques (CA-A et CA-B) recevant chacun l'une des deux voies d'entrée (A, B) d'un même signal analogique fourni par un capteur ou appareil similaire, **caractérisé par le fait qu'**il consiste à réaliser un échantillonnage physique des signaux d'entrée dans les coupleurs analogiques (CA-A, CA-B), à les échanger avec la mémoire (MA) des automates, à prélever, dans la mémoire (MA ), les valeurs échantillonnées à la fréquence d'échantillonnage automate et à réaliser une analyse de concordance des dites valeurs échantillonnées de manière à détecter si les différences sont dues au mécanisme d'acquisition des données auquel cas les entrées sont concordantes ou bien à une véritable différence sur les entrées physiques auquel cas les entrées sont discordantes.

2. Système selon la revendication 1, **caractérisé par le fait que** l'automatisme analyse par une première condition les entrées des deux voies (A et B) de manière à, à partir de la valeur de l'entrée échantillonnée en avance sur la seconde entrée(A ou B) et des valeurs de la seconde entrée (B ou A) au cycle courant et au cycle précédent, déterminer si la valeur de la première entrée est comprise entre les valeurs de la seconde entrée auquel cas les entrées sont concordantes.

3. Système selon l'une quelconque des revendications précédentes, **caractérisé par le fait que** si la première condition n'est pas respectée, l'automate effectue le test d'une deuxième condition pour déterminer si le non respect de la première condition se réalise sur au moins deux cycles successifs auquel cas les entrées sont discordantes

4. Système selon l'une quelconque des revendications précédentes, **caractérisé par le fait que**, pour effectuer le test de rafraîchissement, l'automate vérifie s'il y a égalité entre la valeur d'entrée courante (A ou B) et la même valeur (A ou B) mais mesurée au cycle précédent.

5. Système selon l'une quelconque des revendications précédentes, **caractérisé par le fait que** l'automatisme teste préalablement, à chaque nouveau cycle automate, s'il y a eu ou non rafraîchissement des entrées (A ou B) c'est à dire s'il y a eu modification de ces entrées (A ou B) par rapport à la valeur du cycle précédent et s'il y a eu rafraîchissement de l'une ou l'autre ou les deux valeurs d'entrées (A et B) effectue l'analyse de concordance des entrées.

6. Système selon l'une quelconque des revendications précédentes, **caractérisé par le fait que** lorsque les entrées concordantes, l'entrée résultat est égale à la moyenne des valeurs entrées sur les deux voies (A et B).

7. Système selon l'une quelconque des revendications précédentes, **caractérisé par le fait que** lorsque les entrées sont ni concordantes ni discordantes, l'entrée résultat est la valeur de l'entrée résultant du cycle précèdent.

8. Système selon l'une quelconque des revendications précédentes, **caractérisé par le fait que** lorsque les entrées sont discordantes, l'entrée résultat est la valeur de l'entrée résultant du cycle précèdent et un signal de discordance est envoyé.

## Patentansprüche

1. Gesichertes automatisches System, bestehend aus zwei Steuerungen (PLC-A, PLC-B), die einerseits mit Redundanzmodulen (CR-A und CR-B), die miteinander über eine ketteninterne Verbindung (LIC) verbunden sind, und andererseits mit Analogmodulen (CA-A und CA-B) ausgestattet sind, die jeweils einen der beiden Eingangskanäle (A, B) ein und desselben Analogsignals erhalten, das von einem Aufnehmer oder einem ähnlichen Gerät geliefert wird, **dadurch gekennzeichnet, dass** es darin besteht, eine physikalische Abtastung der Eingangssignale in den Analogmodulen (CA-A, CA-B) vorzunehmen, sie mit dem Speicher (MA) der Steuerungen auszutauschen, aus dem Speicher (MA) die bei der Steuerungsabtastfrequenz abgetasteten Werte abzugreifen und eine Konkordanzanalyse der abgetasteten Werte vorzunehmen, um festzustellen, ob die Unterschiede auf den Datenerfassungsmechanismus, wobei die Eingaben in diesem Fall übereinstimmen, oder aber auf einen wirklichen Unterschied der physikalischen Eingaben, wobei die Eingaben in diesem Fall nicht übereinstimmen, zurückzuführen sind.

2. System nach Anspruch 1, **dadurch gekennzeichnet, dass** das automatische System anhand einer ersten Bedingung die Eingaben der beiden Kanäle (A und B) derart analysiert, dass vom Wert der abgetasteten Eingabe, die der zweiten Eingabe (A oder B) vorauseilt, und von den Werten der zweiten Eingabe (B oder A) im aktuellen Zyklus und im Vorzyklus ausgehend festzustellen, ob der Wert der ersten Eingabe zwischen den Werten der zweiten Eingabe liegt, wobei die Eingaben in diesem Fall übereinstimmen.

3. System nach einem der vorangehenden Ansprüche, **dadurch gekennzeichnet, dass** wenn die erste Bedingung nicht eingehalten wird, die Steuerung den Test einer zweiten Bedingung ausführt, um zu bestimmen, ob die Nichteinhaltung der ersten Bedingung in mindestens zwei aufeinanderfolgenden Zyklen auftritt, wobei die Eingaben in diesem Fall nicht übereinstimmen.

4. System nach einem der vorangehenden Ansprüche, **dadurch gekennzeichnet, dass**, um den Wiederauffrischungstest durchzuführen, die Steuerung überprüft, ob Gleichheit zwischen dem aktuellen Eingabewert (A oder B) und demselben aber im Vorzyklus gemessenen Wert (A oder B) besteht.

5. System nach einem der vorangehenden Ansprüche, **dadurch gekennzeichnet, dass** das automatische System vorbereitend bei jedem neuen Steuerungszyklus überprüft, ob die Eingaben (A oder B) aufgefrischt wurden oder nicht, d.h. ob eine Änderung dieser Eingaben (A oder B) mit Bezug auf den Wert des Vorzyklus stattgefunden hat, und wenn der eine oder andere oder die beiden Eingabewerte (A und B) aufgefrischt wurden, er die Konkordanzanalyse der Eingaben vornimmt.

6. System nach einem der vorangehenden Ansprüche, **dadurch gekennzeichnet, dass** wenn die Eingaben übereinstimmen, die sich ergebende Eingabe gleich dem Mittelwert der auf den beiden Kanälen (A und B) eingegebenen Werte ist.

7. System nach einem der vorangehenden Ansprüche, **dadurch gekennzeichnet, dass** wenn die Eingaben weder konkordant noch ungleich sind, die sich ergebende Eingabe der Wert der sich aus dem Vorzyklus ergebenden Eingabe ist.

8. System nach einem der vorangehenden Ansprüche, **dadurch gekennzeichnet, dass** wenn die Eingaben ungleich sind, die sich ergebende Eingabe der Wert der sich aus dem Vorzyklus ergebenden Eingabe ist und ein Ungleichheitssignal gesendet wird.

## Claims

1. Dependable automation system composed of two controllers (PLC-A and PLC-B) equipped firstly with redundant modules (CR-A and CR-B) connected to each other through an inter-line connection (LIC) and secondly analogue modules (CA-A and CA-B), each of which receives the input from one of two input lines (A, B) from the same analogue signal output by a sensor or a similar device, **characterized by** the fact that it consists of taking physical samples of input signals in the analogue modules (CA-A and CA-B), exchanging them with the memory (MA) of the controllers, taking sampled values from memory (MA) at the controller sampling frequency, and analysing agreement of the said sampled values in order to detect if the differences are due to the data acquisition mechanism, in which case the inputs are in agreement, or if they are due to a genuine difference on the physical inputs, in which case the inputs are in disagreement.

2. System according to claim 1, **characterized by** the fact that the automation system analyses the inputs to the two channels (A and B) according to a first condition, based on the value of the input sampled in advance on the second input (A or B) and the values of the second input to the current cycle and to the previous cycle, to determine if the value of the first input is between the values of the second input, in which case the inputs are in agreement.

3. System according to any one of the previous claims, **characterized by** the fact that if the first condition is not respected, the controller tests a second condition to determine whether or not the first condition is not satisfied for at least two successive cycles, in which case the inputs are in disagreement.

4. System according to any one of the previous claims, **characterized by** the fact that the controller checks whether or not the value of the current input (A or B) and the same value (A or B) measured in the previous cycle are the same, in order to carry out the refreshment test.

5. System according to any one of the previous claims, **characterized by** the fact that for each new controller cycle, the automation system starts by testing if the inputs (A or B) were refreshed, in other words if there was any modification to these inputs (A or B) with respect to the value of the previous cycle and if either or both of the two input values (A and B) were refreshed, then analyses whether the inputs are in agreement.

6. System according to any one of the previous claims, **characterized by** the fact that when the inputs are in agreement, the resulting input is equal to the average of the values input on the two channels (A and B).

7. System according to any one of the previous claims, **characterized by** the fact that when the inputs are not in agreement and are not in disagreement, the resulting input is the value of the resulting input from the previous cycle.

8. System according to any one of the previous claims, **characterized by** the fact that when the inputs are in disagreement, the resulting input is the value of the resulting input from the previous cycle and a disagreement signal is sent.
